# EUROPÄISCHE PATENTSCHRIFT

(11) **EP 2 567 075 B1**
(45) Veröffentlichungstag und Bekanntmachung des Hinweises auf die Patenterteilung: **10.09.2014**
(21) Anmeldenummer: 11714272.9
(22) Anmeldetag: 13.04.2011
(51) Int. Cl.: F16J 15/54, F15B 15/12, F01L 1/344

(54) **NOCKENWELLENVERSTELLER UND U-FÖRMIGES DICHTELEMENT ZUM ABDICHTEN EINER RADIALEN FLÄCHE EINES FLÜGELS EINES NOCKENWELLENVERSTELLERS**
CAMSHAFT ADJUSTER AND U-SHAPED SEALING ELEMENT FOR SEALING A RADIAL FACE OF A VANE OF A CAMSHAFT ADJUSTER
DÉCALEUR D'ARBRE À CAMES ET ÉLÉMENT D'ÉTANCHÉITÉ EN FORME DE U POUR ÉTANCHÉIFIER UNE SURFACE RADIALE D'UNE AILETTE D'UN DÉCALEUR D'ARBRE À CAMES

(30) Priorität: 06.05.2010 DE 102010019530
(43) Veröffentlichungstag der Anmeldung: 13.03.2013
(73) Patentinhaber: Schaeffler Technologies GmbH & Co. KG, 91074 Herzogenaurach (DE)
(72) Erfinder: BUSSE, Michael, 91074 Herzogenaurach (DE); SCHELTER, Stefan, 91463 Dottenheim (DE)
(86) Internationale Anmeldenummer: PCT/EP2011/055755
(87) Internationale Veröffentlichungsnummer: WO 2011/138136

(56) Entgegenhaltungen:
- EP-A2- 0 735 279
- WO-A1-2005/113945
- DE-A1- 10 237 414
- DE-A1-102004 005 822
- DE-A1-102006 004 718
- GB-A- 2 415 480
- US-A- 2 339 042
- US-A- 4 817 504
- US-A- 5 813 316

## Beschreibung

### Gebiet der Erfindung

Die Erfindung betrifft einen Nockenwellenversteller in Flügelzellenbauweise mit einem Stator und einem relativ zu dem Stator verdrehbaren Rotor sowie mindesten zwei zwischen dem Stator und dem Rotor gebildeten Druckkammern, die durch einen radial orientierten Flügel des Rotors voneinander getrennt sind, wobei ein Druckmittel den Druckkammern abwechselnd zuführbar ist, wobei der Flügel eine radiale Fläche und zwei zu den Druckkammern gerichtete Seitenflächen aufweist und wobei die radiale Fläche durch ein U-förmiges Dichtelement mit einem Grundschenkel und zwei an den Seitenflächen anliegenden Seitenschenkeln abgedichtet ist. Ein derartiger Nockenwellenversteller ist in der DE 20 2006 004 718 A1 beschrieben. Die Erfindung betrifft weiterhin ein U-förmiges Dichtelement zum Abdichten einer radialen Fläche eines Flügels eines Nockenwellenverstellers.

### Hintergrund der Erfindung

In modernen Brennkraftmaschinen werden Vorrichtungen zur variablen Einstellung der Steuerzeiten von Gaswechselventilen, auch als Nockenwellenversteller bekannt, eingesetzt, um die Phasenlage einer Nockenwelle relativ zu einer Kurbelwelle in einem definierten Winkelbereich, zwischen einer maximalen Früh- und einer maximalen Spätposition, variabel gestalten zu können. Die Nocken der Nockenwellen liegen für gewöhnlich an Nockenfolgern an, beispielsweise Tassenstößeln, Schlepphebeln oder Schwinghebeln. Wird eine Nockenwelle in Drehung versetzt, so wälzen die Nocken auf den Nockenfolgern ab, die wiederum die Gaswechselventile betätigen. Durch die Lage und die Form der Nocken sind somit sowohl die Öffnungsdauer als auch die Öffnungsamplitude, aber auch die Öffnungs- und Schließzeitpunkte der Gaswechselventile festgelegt.

Die Winkelverschiebung der Nockenwelle in Bezug auf die Kurbelwelle zur Erzielung optimierter Steuerzeiten für verschiedene Drehzahl- und Lastzustände wird als Nockenwellenverstellung bezeichnet. Eine konstruktive Variante eines Nockenwellenverstellers arbeitet beispielsweise nach dem so genannten Schwenkmotorprinzip. Hierbei sind ein Stator und ein Rotor vorgesehen, die koaxial liegen und relativ zueinander beweglich sind. Der Stator und der Rotor bilden zusammen Hydraulikkammerpaare. Ein Kammerpaar ist hierbei jeweils von Stegen des Stators begrenzt und durch einen jeweiligen Flügel des Rotors in zwei zueinander gegenläufige Druckkammern unterteilt, deren Volumina durch eine Relativ-Drehbewegung des Rotors zum Stator gegenläufig verändert werden. In der maximalen Verstellposition liegt der jeweilige Flügel an einem der randseitigen Stege des Stators an. Die Relativ-Drehbewegung des Rotors erfolgt durch eine Verstellung des Flügels, indem ein Hydraulikmedium oder Druckmittel, wie z.B. Öl, über Druckmittelkanäle in eine der Druckkammern des Kammerpaars eingeleitet wird und den Flügel wegdrückt. Die Druckmittelkanäle münden auf beiden Seiten des jeweiligen Flügels, so dass das Hydraulikmedium in die jeweilige Druckkammer geführt wird. Mit der Verstellung des Rotors wird die an den Rotor befestigte Nockenwelle beispielsweise Richtung Früh, d.h. einem früheren Öffnungszeitpunkt der Gaswechselventile, verstellt. Mit Verstellung des Rotors in entgegengesetzter Richtung wird die Nockenwelle gegenüber der Kurbelwelle Richtung Spät, d.h. einem späteren Öffnungszeitpunkt der Gaswechselventile, verstellt.

Ein ungewollter Ölaustausch zwischen den Druckkammern eines Kammerpaarres kann im Kontaktbereich zwischen dem Flügel des Rotors und einer inneren Mantelfläche des Stators stattfinden, da die Dichtlänge des Flügels in Umfangsrichtung relativ klein ist. Um eine Leckage an dieser Stelle zu verhindern, umfasst der Nockenwellenversteller aus der DE 10 2006 004 718 A1 ein U-förmiges Dichtelement aus einem Federstahl oder einem federelastischen Kunststoff. Das Dichtelement weist einen im Wesentlichen in Umfangsrichtung orientierten Grundschenkel sowie zwei radial orientierte Seitenschenkel auf, die den Flügel umgreifen. Eine Außenseite des Grundschenkels ist im Wesentlichen konkav ausgebildet, so dass der Grundschenkel im Bereich der Seitenschenkel zwei Maxima und etwa mittig ein Minimum aufweist. Der Grundschenkel liegt im Bereich seiner Maxima an der Mantelfläche des Stators an. Im Bereich des Minimums des Grundschenkels liegt das Dichtelement an einer radialen Fläche des Flügels an.

Für einen störungsfreien Betrieb des Nockenwellenverstellers ist es außerdem vor großer Bedeutung nicht nur eine Leckage zwischen den gegenläufigen Druckkammern zu minimieren, sondern auch zu verhindern, dass das Öl aus den Druckkammern zurück in die Druckmittelkanäle fließt.

### Aufgabe der Erfindung

Der Erfindung liegt die Aufgabe zugrunde, eine sichere Abdichtung der Druckkammern eines Nockenwellenverstellers zu ermöglichen.

### Lösung der Aufgabe

Die Aufgabe wird erfindungsgemäß gelöst durch einen Nockenwellenversteller in Flügelzellenbauweise mit einem Stator und einem relativ zu dem Stator verdrehbaren Rotor sowie mindesten zwei zwischen dem Stator und dem Rotor gebildeten Druckkammern, die weiterhin einfach Kammern genannt werden. Die Kammern sind durch einen radial orientierten Flügel des Rotors voneinander getrennt, wobei während des Betriebs ein Druckmittel den Kammern abwechselnd zuführbar ist. Der Flügel weist eine radiale Fläche und zwei zu den Kammern gerichtete Seitenflächen auf. Die radiale Fläche ist durch ein U-förmiges Dichtelement mit einem Grundschenkel und zwei an den Seitenflächen des Flügels anliegenden Seitenschenkeln abgedichtet. An den Seitenschenkeln sind Rückschlagventile ausgebildet und an den Seitenflächen des Flügels sind Auslässe für das Druckmittel ausgebildet, denen die Rückschlagventile zugeordnet sind.

Die Aufgabe wird weiterhin erfindungsgemäß gelöst durch ein U-förmiges Dichtelement zum Abdichten einer radialen Fläche eines Flügels eines Nockenwellenverstellers, umfassend einen Grundschenkel und zwei Seitenschenkel, wobei an den Seitenschenkeln Rückschlagventile für im Flügel ausgebildete Auslässe für ein Druckmittel vorgesehen sind. Die in Bezug auf den Nockenwellenversteller nachstehend aufgeführten Vorteile und bevorzugten Ausgestaltungen sind sinngemäß auf das Dichtelement zu übertragen.

Die Erfindung basiert auf der Erkenntnis, dass eine besonders sichere Abdichtung der Kammern eines Nockenwellenverstellers gewährleistet ist, indem die Funktion des Dichtelements, durch welches zunächst eine radiale Abdichtung zwischen den gegenläufigen Kammern eines Kammerpaares realisiert ist, durch eine Abdichtung der jeweiligen Kammer gegenüber der Druckmittelkanäle für die Druckmittelzufuhr ergänzt wird. Die einzige konstruktive Voraussetzung hierfür ist, dass die Druckmittelkanäle im Bereich der Seitenflächen des Flügels des Rotors in die Kammern münden, so dass das U-förmige Dichtelement, welches das Flügel umgreift, mit seinen Seitenschenkeln die Auslässe der Druckmittekanäle überdecken kann. Hierbei ist insbesondere im Rotor ein Volumenspeicher für das Druckmittel ausgebildet, so dass durch diese Anordnung des Volumenspeichers der Druckaufbau beim Verstellen des Nockenwellenverstellers aufrechterhalten bleibt. Das Öl wird von dort aus über die Druckmittelkanäle ins Innere des Flügels eingeleitet und anschließend über einen Auslass an der entsprechenden Seitenfläche des Flügels in eine der Kammern eingespeist, wenn in der Kammer Unterdruck in Bezug auf den Volumenspeicher vorliegt.

Unter Rückschlagventil wird ein Armaturelement verstanden, das sich in einer bestimmten Strömungsrichtung öffnet und in entgegengesetzter Strömungsrichtung verschließt. Hierbei öffnet sich das Rückschlagventil beim Einleiten des Druckmittels in die entsprechende Kammer und verschließt sich, um ein Auslaufen des Druckmittels zurück in den Volumenspeicher zu verhindern. Die Rückschlagventile sind derart dimensioniert und positioniert, dass sie sich im zusammengebauten Zustand des Nockenwellenverstellers vor den Auslässen an den Flügeln befinden.

Die Rückschlagventile, die an den Seitenschenkeln des Dichtelements korrespondierend zu den Auslässen angeordnet sind, befinden sich außerhalb des Flügels. Die Herstellung der Rückschlagventile erfolgt somit entkoppelt von der Herstellung des Rotors und des Stators und ihre Montage ist wesentlich einfacher im Vergleich zu einer Anordnung der Rückschlagventile innerhalb der Druckmittelkanäle.

Der wesentliche Vorteil dieser Ausgestaltung ist, dass die Abdichtung der jeweiligen Kammer gegenüber der gegenläufigen Kammer sowie gegenüber dem Volumenspeicher durch ein einziges Dichtelement erfolgt, für welches ein kleiner Bauraum erforderlich ist. Die Rückschlagventile sind insbesondere ein integraler Bestandteil des Dichtelements und werden im selben Herstellungsschritt wie das Dichtelement ausgebildet. Somit erübrigt sich ein weiterer Fertigungsschritt zur separaten Montage der Rückschlagventile. Da das Dichtelement und die Rückschlagventile nicht einzeln montiert werden müssen, zeichnet sich die Herstellung des Nockenwellenverstellers durch geringe Kosten aus.

Im Hinblick auf eine einfache Ausbildung des Dichtelements ist dieses aus einem Blechteil, wobei die Rückschlagventile in den Seitenschenkeln ausgestanzt sind. Das Dichtelement wird insbesondere aus einem endlosen Profil durch Schneiden und Trennen auf eine bestimmte Länge hergestellt. Anschließend werden die Rückschlagventile im Material des Dichtelements ausgestanzt. Dies ermöglicht eine besonders kostengünstige Herstellung. Alternativ kann das Dichtelement aus einem elastischen Kunststoff gefertigt werden, welcher ebenfalls eine einfache und kostengünstige Fertigung der Rückschlagventile ermöglicht.

Nach einer bevorzugten Ausgestaltung umfasst das Rückschlagventil einen Biegebalken und eine kreisförmige Platte. Die kreisförmige Platte stellt hierbei das Schließelement des Rückschlagventils dar, welches durch den Biegebalken mit dem Dichtelement verbunden ist. Aufgrund einer Druckdifferenz zwischen dem Volumenspeicher und der entsprechenden Kammer wird die kreisförmige Platte vom Öl nach außen zur Kammer hin gedrückt, so dass der Auslass aufgedeckt wird und das Öl in die Kammer fließen kann. Die kreisförmige Platte führt dabei eine Schwenkbewegung um eine Schwenkachse aus, die mit der die Verbindungslinie des Balkens mit dem Dichtelement zusammenfällt. Die kreisförmige Platte ist insbesondere etwas größer ausgebildet als der korrespondierende Auslass am Flügel.

Nach einer weiteren bevorzugten Ausgestaltung ist zur Rückstellung der kreisförmigen Platte eine Hubbegrenzung als Federelement vorgesehen, die aus einer umgebogenen Lasche ausgebildet ist und die kreisförmige Platte drückt. Damit das Öl in die Kammer eingeleitet werden kann, muss es die Kraft, die im Balken gespeichert ist, überwinden und wenn das Rückschlagventil maximal geöffnet ist, erreicht die kreisförmige Platte die Hubbegrenzung. Die Hubbegrenzung stellt im unbearbeiteten Zustand eine vom Rand des Dichtelements herausragende Lasche dar, die anschließend um etwa 180° umgebogen und insbesondere gebördelt wird, so dass sie an der Außenseite des Seitenschenkels anliegt und dabei die kreisförmige Platte des Rückschlagventils nach innen drückt. Um nur die Bewegung der kreisförmigen Platte, jedoch nicht die Bewegung des Balkens zu beschränken, ist die Lasche insbesondere derart am Rand des Dichtelements angeordnet, dass die Platte sich zwischen ihr und der Schwenkachse befindet. Dank der Hubbegrenzung weist die kreisförmige Platte ein elastisches Verhalten auf und nimmt ihre Ausgangs- oder Schließposition an, wenn auf beiden Seiten des Rückstellventils sich der gleiche Druck eingestellt hat oder der Druck in der Kammer höher ist als der im Druckmittelkanal.

Bevorzugt ist der Grundschenkel des Dichtelements von außen betrachtet konvex ausgebildet. Beim Vorspannen des Grundschenkels gegenüber dem Stator liegt der Grundschenkel somit großflächig an der inneren Mantelfläche des Stators an und gewährleistet eine gute Abdichtung in diesem Bereich. Die Krümmung des Grundschenkels ist dabei insbesondere gering, der Krümmungsradius ist beispielweise um das Vielfache größer als die Bogenlänge des Grundschenkels.

Vorzugsweise ist am Grundschenkel des Dichtelements eine Blattfeder zum Abstützen des Dichtelements auf der radialen Fläche des Flügels vorgesehen. Durch die Blattfeder liegt somit das Dichtelement permanent unter Vorspannung am Stator an. Die Blattfeder kann sowohl ein- als auch mehrteilig ausgebildet sein. Insbesondere ist die Blattfeder zweiteilig ausgebildet, wobei beide Blätter radial nach innen, zum Flügel hin, gedrückt sind. Die Blattfeder ist insbesondere im Material des Dichtelements z.B. durch Scheren oder Stanzen eingearbeitet. Zur Abstützung der Blattfeder ist vorzugsweise an der radialen Fläche des Flügels eine Nut ausgebildet.

Je größer die Fläche ist, über die das Öl radiale Druckkräfte auf das Dichtelement ausüben kann, umso wahrscheinlicher ist, dass das Öl den Grundschenkel radial nach innen drückt und tiefer in den Spalt zwischen dem Dichtelement und der Mantelfläche des Stators eindringt, bis es im ungünstigsten Fall zu einem Kurzschluss zwischen den beiden Kammern kommt. Um diese Situation zu verhindern, sind die Randbereiche zwischen dem Grundschenkel und den Seitenschenkeln vorzugsweise scharfkantig ausgebildet. Dies bedeutet, dass die abgerundeten Kanten zwischen dem Grundschenkel und den Seitenschenkeln einen sehr kleinen Krümmungsradius aufweisen, insbesondere einen Krümmungsradius der um das Vielfache kleiner ist als die radialen Längen der Seitenschenkel.

Nach einer bevorzugten Variante ist der Flügel zwischen den elastisch aufgeweiteten Seitenschenkeln des Dichtelements eingespannt. Die Seitenflächen des Flügels verlaufen insbesondere parallel zueinander und die Seitenschenkel des auf dem Flügel aufgesetzten Dichtelements sind ebenfalls zueinander parallel orientiert. Das Dichtelement ist jedoch derart ausgebildet, dass im vormontierten Zustand die Seitenschenkel ausgehend von dem Grundschenkel konvergierend aufeinander zulaufend sind. Erst bei der Montage des Dichtelements weiten sich die Seitenschenkel auf und nehmen die parallele Orientierung an. Im montierten Zustand ist somit zwischen dem Flügel und den Seitenschenkeln eine geringfügige Reibung vorhanden, welche verhindert, dass Öl zwischen den Seitenschenkeln und dem Flügel eindringen kann.

Ein Anschlag des Rotors am Stator über den Flügel ist wegen dem Dichtelement nicht mehr möglich, da dadurch die Hubbegrenzung deformiert werden kann. Aus diesem Grund ist bevorzugt am Außendurchmesser des Rotors mindestens eine Nase zum Anschlag am Stator ausgebildet. Die Nase ragt aus dem Rotor radial nach außen hervor, wobei ihre Höhe kleiner und insbesondere viel kleiner ist als die des Flügels. Beispielsweise beträgt die Höhe der Nase etwa 1/4 bis 1/3 der Höhe des Flügels. Im Stator ist insbesondere eine Aufnahme in Umfangsrichtung vorgesehen, welche mit der Höhe der Nase korreliert ist und somit den Anschlag für den Rotor bildet. Alternativ zu einer Nase am Außendurchmesser des Rotors kann der Anschlag mittels eines axialen Stiftes realisiert werden, der axial vom Rotor hinausragt und in eine korrespondierende Nut an einem stirnseitigen Deckel eingreift.

Ein Ausführungsbeispiel der Erfindung wird anhand einer Zeichnung näher erläutert. Hierin zeigen:

### Kurze Beschreibung der Zeichnung

- Fig. 1: in einer perspektivischen Darstellung einen Nockenwellenversteller,
- Fig. 2: aus einem ersten Blickwinkel perspektivisch ein U-förmiges Dichtelement für einen Nockenwellenversteller,
- Fig. 3: aus einem zweiten Blickwinkel perspektivisch das Dichtelement gemäß Fig. 2,
- Fig. 4: das Dichtelement gemäß Fig. 2 in einer Vorderansicht, und
- Fig. 5: das Dichtelement gemäß Fig. 2 in einer Seitenansicht.

In den Figuren sind gleich wirkende Teile mit den gleichen Bezugszeichen versehen.

### Ausführliche Beschreibung der Zeichnung

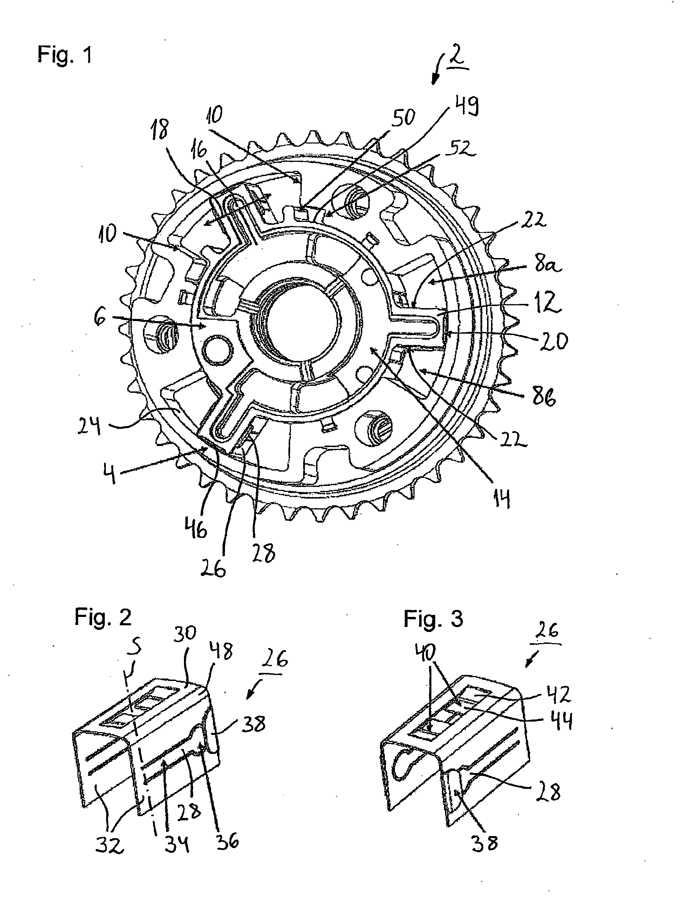

In Fig. 1 ist ein Nockenwellenversteller 2 zur variablen Einstellung der Steuerzeiten von Gasventilen einer nicht näher gezeigten Brennkraftmaschine dargestellt. Der Nockenwellenversteller 2 umfasst einen Stator 4 und einen innerhalb des Stators 4 angeordneten Rotor 6, der schwenkbar in Bezug auf den Stator 4 gelagert ist. Zwischen dem Stator 4 und dem Rotor 6 sind mehrere Kammerpaare gebildet, wobei jedes Kammerpaar zwei zueinander gegenläufige Druckkammern oder einfach Kammern 8a, 8b umfasst. Die Kammerpaare sind durch Stege 10 des Stators 4 voneinander getrennt. Ein sich radial erstreckender Flügel 12 des Rotors 6 trennt die zwei zueinander gegenläufigen Kammern 8a, 8b eines Kammerpaares.

In die Kammern 8a, 8b eines Kammerpaares wird abwechselnd ein Druckmittel eingespeist, in diesem Fall ein Öl. Durch das Öl wird das Volumen der jeweiligen Kammer 8a, 8b vergrößert, indem der Flügel 12 hydraulisch weggedrückt wird. Das Volumen der gegenläufigen Kammer wird entsprechend verkleinert.

Zur Speicherung des Öls ist innerhalb des Rotors 6 ein Volumenspeicher 14 vorgesehen. Das Öl aus dem Volumenspeicher 14 wird über einen radialen Druckmittelkanal 16 im Inneren des Flügels 12 und über einen hier nicht näher gezeigten Querabschnitt des Druckmittelkanals alternierend in eine der Kammer 8a, 8b eingeleitet. Der Druckmittelkanal 16 mündet in die jeweilige Kammer 8a, 8b über nicht näher gezeigte Auslässe am Flügel 12. Der Ölstrom innerhalb des Rotors ist mit dem Pfeil 18 angedeutet.

Der Flügel 12 weist eine radiale Fläche 20 sowie zwei zu der jeweiligen Druckkammer 8a, 8b gerichtete Seitenflächen 22 auf. Zum Abdichten des Flügels 12 gegenüber einer inneren Mantelfläche 24 des Stators 4 ist ein U-förmiges Dichtelement 26 vorgesehen, welches in diesem Ausführungsbeispiel als ein Blechteil ausgebildet ist und beim Zusammenbauen des Nockenwellenverstellers 2 radial auf den Flügel 12 aufgesteckt wird. Im Dichtelement 26 sind außerdem Rückschlagventile 28 integriert, die zu den Auslässen an den Seitenflächen 22 des Flügels 12 korrespondieren und ein Auslaufen des Öls aus den Kammern 8a, 8b zurück in den Volumenspeicher 14 verhindern.

Der Aufbau eines solchen Dichtelements 26 ist aus den Fig. 2 bis 5 ersichtlich. Das Dichtelement 26 umfasst einen Grundschenkel 30 und zwei Seitenschenkel 32, die im montierten Zustand an der radialen Fläche 20 bzw. an den beiden Seitenflächen 22 des Flügels 12 anliegen. Die Rückschlagventile 28 weisen einen Biegebalken 34 und eine kreisförmige Platte 36 auf und sind in diesem Ausführungsbeispiel durch Stanzen im Material des Dichtelements 26 ausgebildet. Die kreisförmige Platte 36 überdeckt den Auslass für das Öl am Flügel 12 und hat einen Durchmesser, der etwas größer ist als der Durchmesser des Auslasses. Wenn in der Kammer 8a, 8b Unterdruck in Bezug auf den Volumenspeicher 14 herrscht, drückt das Öl die kreisförmige Platte 36 nach außen, so dass das Rückschlagventil 28 eine Schwenkbewegung um eine Schwenkachse S entlang der Verbindungslinie zwischen dem Biegebalken 34 und dem Dichtelement 26 ausführt.

Eine Hubbegrenzung 38 dient zur mechanischen Rückstellung der kreisförmigen Platte 36 und somit zum Verschließen des Auslasses für das Öl, wenn der Druck zwischen der Kammer 8a, 8b und dem Volumenspeicher 14 der gleiche ist oder in der Kammer 8a, 8b sich Überdruck eingestellt hat. Die Hubbegrenzung 38 ist nach Art einer Lasche am Rand des Dichtelements 26 ausgebildet, die um 180° nach hinten umgebogen ist, so dass sie auf der kreisförmigen Platte 36 aufliegt und diese zum Auslass hin drückt. Die Hubbegrenzung 38 ist hierbei derart angeordnet, dass die kreisförmige Platte 36 zwischen ihr und der Schwenkachse S liegt.

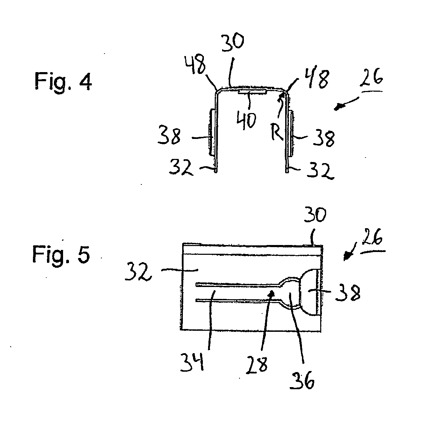

Wie insbesondere aus Fig. 4 ersichtlich, ist der Grundschenkel 30 des Dichtelements 26 leicht konvex ausgebildet. Ein hier nicht näher gezeigter Krümmungsradius des konvexen Grundschenkels 30 ist z.B. 3 bis 5-fach größer als die Länge des Grundschenkels 30. Im Grundschenkel 30 ist außerdem eine zweiteilige Blattfeder 40 ausgeschnitten, mit deren Hilfe sich das Dichtelement 26 auf dem Flügel 12 abstützt. Dank der Blattfeder 40 ist das Dichtelement 26 im montierten Zustand stets gegenüber der Mantelfläche 24 des Stators 4 vorgespannt. Jedes der Blätter der zweiteiligen Blattfeder 40 ist radial nach innen gedrückt und weist einen schrägen Bereich 42 und einen waagerechten Bereich 44 auf, mit dem sich das Dichtelement 26 auf dem Flügel 12 abstützt. Zur Aufnahme der Blattfeder ist an der radialen Fläche 20 des Flügels 12 gemäß Fig. 1 eine Nut 46 vorgesehen.

Im gezeigten Ausführungsbeispiel sind die Randbereiche 48 zwischen dem Grundschenkel 30 und den Seitenschenkeln 32 relativ scharfkantig ausgebildet, um ein Eindringen von Öl zwischen dem Grundschenkel 30 und dem Stator 4 zu verhindern. Somit ist ein Krümmungsradius R der Randbereiche 48 mehrfach kleiner als die radiale Länge der Seitenschenkel 32 (siehe Fig. 4), insbesondere ist der Seitenschenkel 32 über 10-fach länger als der Krümmungsradius R.

Die Seitenflächen 22 der Flügel 12 verlaufen im Wesentlichen parallel zueinander. Im montierten Zustand des Dichtelements 26 erstrecken sich die Seitenschenkel 32, die auf den Seitenflächen 22 anliegen, ebenfalls parallel zueinander. Die Seitenschenkel 32 sind im vormontierten Zustand jedoch ausgehend von dem Grundschenkel 30 konvergierend aufeinander zulaufend ausgebildet, so dass der Abstand zwischen den Seitenschenkeln mit immer größerer Entfernung vom Grundschenkel 30 immer kleiner wird. Wenn das Dichtelement 26 den Flügel 12 umgreift, ist der Flügel 12 zwischen den elastisch aufgeweiteten Seitenschenkeln 32 eingespannt, so dass sich das Öl nicht zwischen den Seitenschenkeln 32 und den Seitenflächen 22 ausbreiten kann.

Da bei einem Anschlag des Flügels 12 gegen die Stege 10 des Stators 4 die Hubbegrenzung 38 beschädigt werden kann, weist der Rotor 6 auf seinem Außenumfang 49 mindestens eine Nase 50 auf (siehe Fig. 1), die zum Anschlag am Stator 4 vorgesehen ist. Die Nase 50 erstreckt sich radial nach außen, weist jedoch eine viel kleinere Höhe als der Flügel 12 auf. Korrespondierend zur Nase 50 ist in einer Aufnahme am Steg 10 des Stators 4 eine Anschlagfläche 52 ausgebildet.

Der wesentliche Vorteil der oben beschriebenen Anordnung ist, dass mittels des Dichtelements 26 mit dem integrierten Rückschlagventil 28 eine Abdichtung der Kammern 8a, 8b sowohl zur jeweils gegenläufigen Kammer 8a, 8b als auch zu den Druckmittelkanälen 16 im Flügel 12 gewährleistet ist.

### Liste der Bezugszahlen

- 2: Nockenwellenversteller
- 4: Stator
- 6: Rotor
- 8a,8b: Druckkammer
- 10: Steg
- 12: Flügel
- 14: Volumenspeicher
- 16: Druckmittelkanal
- 18: Ölstrom
- 20: radiale Fläche
- 22: Seitenfläche
- 24: Mantelfläche des Stators
- 26: Dichtelement
- 28: Rückschlagventil
- 30: Grundschenkel
- 32: Seitenschenkel
- 34: Biegebalken
- 36: kreisförmige Platte
- 38: Hubbegrenzung
- 40: Blattfeder
- 42: schräger Bereich
- 44: waagerechter Bereich
- 46: Nut
- 48: Randbereich
- 49: Außenumfang
- 50: Nase
- 52: Anschlagfläche

- R: Krümmungsradius
- S: Schwenkachse

## Patentansprüche

1. Nockenwellenversteller (2) in Flügelzellenbauweise mit einem Stator (4) und einem relativ zu dem Stator (4) verdrehbaren Rotor (6) sowie mindesten zwei zwischen dem Stator (4) und dem Rotor (6) gebildeten Druckkammern (8a,8b), die durch einen radial orientierten Flügel (12) des Rotors (6) voneinander getrennt sind, wobei ein Druckmittel den Druckkammern (8a,8b) abwechselnd zuführbar ist, wobei der Flügel (12) eine radiale Fläche (20) und zwei zu den Druckkammern (8a,8b) gerichtete Seitenflächen (20) aufweist und wobei die radiale Fläche (20) durch ein U-förmiges Dichtelement (26) mit einem Grundschenkel (30) und zwei an den Seitenflächen (22) anliegenden Seitenschenkeln (32) abgedichtet ist, **dadurch gekennzeichnet, dass** an den Seitenschenkeln (32) des Dichtelements (26) Rückschlagventile (28) ausgebildet sind und an den Seitenflächen (22) des Flügels (12) Auslässe für das Druckmittel ausgebildet sind, denen die Rückschlagventile (28) zugeordnet sind.

2. Nockenwellenversteller (2) nach Anspruch 1, **dadurch gekennzeichnet,** ass das Dichtelement (26) aus einem Blechteil ausgebildet ist und die Rückschlagventile (28) in den Seitenschenkeln (32) ausgestanzt sind.

3. Nockenwellenversteller (2) nach Anspruch 1 oder 2, **dadurch gekennzeichnet, dass** jedes Rückschlagventil (28) einen Biegebalken (34) und eine kreisförmige Platte (36) umfasst.

4. Nockenwellenversteller (2) nach Anspruch 3, **dadurch gekennzeichnet, dass** zur Rückstellung der kreisförmigen Platte (36) eine Hubbegrenzung (38) vorgesehen ist, die als eine umgebogene Lasche ausgebildet ist und die kreisförmige Platte (36) drückt.

5. Nockenwellenversteller (2) nach einem der vorhergehenden Ansprüche, **dadurch gekennzeichnet, dass** der Grundschenkel (30) des Dichtelements (26) von außen betrachtet konvex ausgebildet ist.

6. Nockenwellenversteller (2) nach einem der vorhergehenden Ansprüche, **dadurch gekennzeichnet, dass** am Grundschenkel (30) des Dichtelements (26) eine Blattfeder (40) zum Abstützen des Dichtelements (26) auf der radialen Fläche (20) des Flügels (12) vorgesehen ist.

7. Nockenwellenversteller (2) nach Anspruch 6, **dadurch gekennzeichnet, dass** die Randbereiche (48) zwischen dem Grundschenkel (30) und den Seitenschenkeln (32) scharfkantig ausgebildet sind.

8. Nockenwellenversteller (2) nach einem der vorhergehenden Ansprüche, **dadurch gekennzeichnet, dass** der Flügel (12) zwischen den elastisch aufgeweiteten Seitenschenkeln (32) des Dichtelements (26) eingespannt ist.

9. Nockenwellenversteller (2) nach einem der vorhergehenden Ansprüche, **dadurch gekennzeichnet, dass** am Außenumfang (49) des Rotors (6) mindestens eine Nase (50) zum Anschlag am Stator (4) ausgebildet ist.

10. U-förmiges Dichtelement (26) zum Abdichten einer radialen Fläche (20) eines Flügels (12) eines Nockenwellenverstellers (2), umfassend einen Grundschenkel (30) und zwei Seitenschenkel (32), wobei an den Seitenschenkeln (32) Rückschlagventile (28) für am Flügel (12) ausgebildete Auslässe für ein Druckmittel vorgesehen sind.

## Claims

1. Vane-type camshaft adjuster (2) having a stator (4) and having a rotor (6) which is rotatable relative to the stator (4) and having at least two pressure chambers (8a, 8b) which are formed between the stator (4) and the rotor (6) and which are separated from one another by a radially oriented vane (12) of the rotor (6), wherein a pressure medium can be supplied alternately to the pressure chambers (8a, 8b), wherein the vane (12) has a radial surface (20) and two side surfaces (22) directed toward the pressure chambers (8a, 8b), and wherein the radial surface (20) is sealed off by a U-shaped sealing element (26) having a base limb (30) and having two side limbs (32) which bear against the side surfaces (22), **characterized in that** check valves (28) are formed on the side limbs (32) of the sealing element (26), and outlets for the pressure medium are formed on the side surfaces (22) of the vane (12), to which outlets the check valves (28) are assigned.

2. Camshaft adjuster (2) according to Claim 1, **characterized in that** the sealing element (26) is formed from a sheet-metal part and the check valves (28) are punched out in the side limbs (32).

3. Camshaft adjuster (2) according to Claim 1 or 2, **characterized in that** each check valve (28) comprises a bending beam (34) and a circular plate (36).

4. Camshaft adjuster (2) according to Claim 3, **characterized in that**, for the resetting of the circular plate (36), a stroke limiter (38) is provided which is in the form of a bent-over lug and which presses against the circular plate (36).

5. Camshaft adjuster (2) according to one of the preceding claims, **characterized in that** the base limb (30) of the sealing element (26) is of convex form as viewed from the outside.

6. Camshaft adjuster (2) according to one of the preceding claims, **characterized in that**, on the base limb (30) of the sealing element (26), there is provided a leaf spring (40) for supporting the sealing element (26) on the radial surface (20) of the vane (12).

7. Camshaft adjuster (2) according to Claim 6, **characterized in that** the edge regions (48) between the base limb (30) and the side limbs (32) are of sharp-edged form.

8. Camshaft adjuster (2) according to one of the preceding claims, **characterized in that** the vane (12) is braced between the elastically flared side limbs (32) of the sealing element (26).

9. Camshaft adjuster (2) according to one of the preceding claims, **characterized in that** at least one lug (50) for abutment against the stator (4) is formed on the outer circumference (49) of the rotor (6).

10. U-shaped sealing element (26) for sealing off a radial surface (20) of a vane (12) of a camshaft adjuster (2), comprising a base limb (30) and two side limbs (32), wherein on the side limbs (32) there are provided check valves (28) for outlets, which are formed on the vane (12), for a pressure medium.

## Revendications

1. Déphaseur d'arbre à cames (2) de construction à ailettes, comprenant un stator (4) et un rotor (6) pouvant tourner par rapport au stator (4) ainsi qu'au moins deux chambres de pression (8a, 8b) formées entre le stator (4) le rotor (6), lesquelles sont séparées l'une de l'autre par une ailette orientée radialement (12) du rotor (6), un fluide de pression pouvant être amené en alternance aux chambres de pression (8a, 8b), l'ailette (12) présentant une surface radiale (20) et deux surfaces latérales (22) orientées vers les chambres de pression (8a, 8b), et la surface radiale (20) étant étanchéifiée par un élément d'étanchéité en forme de U (26) avec une branche de base (30) et deux branches latérales (32) s'appliquant contre les surfaces latérales (22), **caractérisé en ce que** des clapets anti-retour (28) sont réalisés au niveau des branches latérales (32) de l'élément d'étanchéité (26) et des sorties pour le fluide de pression sont réalisées au niveau des surfaces latérales (22) de l'ailette (12), auxquelles sorties sont associés les clapets anti-retour (28).

2. Déphaseur d'arbre à cames (2) selon la revendication 1, **caractérisé en ce que** l'élément d'étanchéité (26) est réalisé à partir d'une pièce en tôle et les clapets anti-retour (28) sont estampés dans les branches latérales (32).

3. Déphaseur d'arbre à cames (2) selon la revendication 1 ou 2, **caractérisé en ce que** chaque clapet anti-retour (28) comprend une poutre flexible (34) et une plaque de forme circulaire (36).

4. Déphaseur d'arbre à cames (2) selon la revendication 3, **caractérisé en ce que** pour le rappel de la plaque de forme circulaire (36), il est prévu une limitation de course (38) qui est réalisée sous forme de patte recourbée et qui presse contre la plaque de forme circulaire (36).

5. Déphaseur d'arbre à cames (2) selon l'une quelconque des revendications précédentes, **caractérisé en ce que** la branche de base (30) de l'élément d'étanchéité (26) est réalisée sous forme convexe, vu depuis l'extérieur.

6. Déphaseur d'arbre à cames (2) selon l'une quelconque des revendications précédentes, **caractérisé en ce qu**'un ressort à lame (40) est prévu au niveau de la branche de base (30) de l'élément d'étanchéité (26) pour supporter l'élément d'étanchéité (26) sur la surface radiale (20) de l'ailette (12).

7. Déphaseur d'arbre à cames (2) selon la revendication 6, **caractérisé en ce que** les régions de bord (48) entre la branche de base (30) et les branches latérales (32) sont réalisées avec des arêtes vives.

8. Déphaseur d'arbre à cames (2) selon l'une quelconque des revendications précédentes, **caractérisé en ce que** l'ailette (12) est serrée entre les branches latérales élargies élastiquement (32) de l'élément d'étanchéité (26).

9. Déphaseur d'arbre à cames (2) selon l'une quelconque des revendications précédentes, **caractérisé en ce qu**'au moins un ergot (50) est réalisé au niveau de la périphérie extérieure (49) du rotor (6) pour buter contre le stator (4).

10. Elément d'étanchéité en forme de U (26) pour étanchéifier une surface radiale (20) d'une ailette (12) d'un déphaseur d'arbre à cames (2), comprenant une branche de base (30) et deux branches latérales (32), des clapets anti-retour (28) étant prévus au niveau des branches latérales (32) pour des sorties pour un fluide de pression réalisées au niveau de l'ailette (12).
